# EUROPÄISCHE PATENTANMELDUNG

(11) **EP 4 357 483 A1**
(43) Veröffentlichungstag der Anmeldung: **24.04.2024**
(21) Anmeldenummer: 22020494.5
(22) Anmeldetag: 18.10.2022
(51) Int. Cl.: C25B 1/04, C25B 9/19, C25B 15/023, C25B 15/08, B01D 19/00, B01D 53/14

(54) **VERFAHREN UND ANLAGE ZUR HERSTELLUNG EINES ODER MEHRERER ELEKTROLYSEPRODUKTE**

(71) Anmelder: Linde GmbH, 82049 Pullach (DE)
(72) Erfinder: Gaube, Gerald, 82049 Pullach (DE); Dietzen, Markus, 82049 Pullach (DE)
(74) Vertreter: Imhof, Dietmar

(57) **Zusammenfassung**

Es wird ein Verfahren zur Herstellung eines oder mehrerer Elektrolyseprodukte vorgeschlagen, wobei eine oder mehrere Elektrolysezellen (10) verwendet werden, wobei der einen oder den mehreren Elektrolysezellen (10) kathodenseitig ein wasserstoffreiches Kathodenentnahmegas entnommen wird, wobei der einen oder den mehreren Elektrolysezellen (10) anodenseitig ein Anodenentnahmegas (3) entnommen wird, wobei das Anodenentnahmegas (3) der einen oder den mehreren Elektrolysezellen (10) als Teil eines Zweiphasenstroms (1) entnommen wird, wobei der Zweiphasenstrom (1) das Anodenentnahmegas (3) und eine Wasserphase (2) aufweist, wobei der Zweiphasenstrom (1) oder ein Teil hiervon in einer Separatoranordnung (20) unter Erhalt des Anodenentnahmegases (3) und der Wasserphase (2) getrennt wird, und wobei das Verfahren einen Verfahrensmodus aufweist, während welchem ein Gasraum (21) der Separatoranordnung (20) unter Verwendung eines Spülgases (4) gespült wird. Es ist vorgesehen, dass als das Spülgas (4) ein im Wesentlichen kohlendioxidfreies Gasgemisch verwendet wird. Eine entsprechende Anlage ist ebenfalls Gegenstand der Erfindung.

## Beschreibung

Die vorliegende Erfindung betrifft ein Verfahren und eine Anlage zur Herstellung eines oder mehrerer Elektrolyseprodukte, insbesondere Wasserstoff und ggf. Sauerstoff, insbesondere unter Einsatz einer Elektrolysezelle mit einer Protonenaustauschmembran.

### Hintergrund der Erfindung

Die Herstellung von Wasserstoff unter Verwendung von Elektrolysezellen mit Protonenaustauschmembranen (engl. Proton Exchange Membranes, PEM) ist bekannt. In entsprechenden Elektrolysezellen wird ein Festpolymerelektrolyt, die Protonenaustauschmembran, verwendet. Die Protonenaustauschmembran dient zur Leitung von Protonen, zur Abtrennung der Produktgase, und zur elektrischen Isolierung der Anoden- und Kathodenseite voneinander. Durch den Einsatz von Elektrolysezellen mit Protonenaustauschmembranen kann ein Teil der Probleme hinsichtlich des Teillastbetriebs sowie der geringen möglichen Stromdichten, die bei der konventionellen alkalischen Elektrolyse auftreten, überwunden werden.

Aufgrund des vergleichsweise hohen Drucks des gebildeten Wasserstoffs bei der Verwendung von Elektrolysezellen mit Protonenaustauschmembranen können Verbraucher direkt versorgt werden. Die verwendbaren hohen Stromdichten führen zu vergleichsweise geringen Betriebskosten, insbesondere in Fällen, in denen dynamische elektrische Energiequellen wie Wind und Sonne zum Einsatz kommen, wo Spitzen in der Energiezufuhr andernfalls nicht genutzt werden können. Der Polymerelektrolyt ermöglicht die Verwendung dünner Membranen von beispielsweise ca. 100 bis 200 µm bei zugleich hohen Drücken. Dies führt zu geringen ohmschen Verlusten, die in erster Linie durch die Leitung von Protonen durch die Membran und die Bildung von druckbeaufschlagtem Wasserstoff verursacht werden.

Die Polymerelektrolytmembran weist aufgrund ihrer festen Struktur eine niedrige Gasübergangsrate auf, was zu einer sehr hohen Produktgasreinheit führen kann. Dies kann insbesondere für die Speichersicherheit und für die direkte Verwendung, beispielsweise in einer Brennstoffzelle, vorteilhaft sein.

Die Anodenreaktion in einer Elektrolysezelle mit Protonenaustauschmembran wird gemeinhin als Sauerstoffentwicklungsreaktion (engl. Oxygen Evolution Reaction, OER) bezeichnet. An der Anode wird der flüssige Reaktant Wasser dem Katalysator zugeführt und zu Sauerstoff, Protonen und Elektronen oxidiert:

2 H₂O (I) → O₂ (g) + 4 H⁺ (aq) + 4 e⁻

Die Kathodenreaktion wird gemeinhin als Wasserstoffentwicklungsreaktion (engl. Hydrogen Evolution Reaction, HER) bezeichnet. Hierbei werden die zugeführten Elektronen mit den durch die Membran geleiteten Protonen kombiniert, wodurch gasförmiger Wasserstoff erzeugt wird:

4 H⁺ (aq) + 4 e⁻ → 2 H₂ (g)

Neben Wasserstoff kann auch der in entsprechenden Elektrolysezellen an der Anodenseite gebildete Sauerstoff genutzt werden.

Die vorliegende Erfindung stellt sich die Aufgabe, die Herstellung von Wasserstoff und ggf. Sauerstoff, insbesondere unter Einsatz von Elektrolysezellen mit Protonenaustauschmembran, zu verbessern und insbesondere sicherer und zuverlässiger zu gestalten.

### Offenbarung der Erfindung

Vor diesem Hintergrund schlägt die vorliegende Erfindung ein Verfahren und eine Anlage zur Herstellung eines oder mehrerer Elektrolyseprodukte, insbesondere Wasserstoff und ggf. Sauerstoff, insbesondere unter Einsatz einer Elektrolysezelle mit einer Protonenaustauschmembran, mit den Merkmalen der unabhängigen Patentansprüche vor. Ausgestaltungen sind jeweils Gegenstand der abhängigen Ansprüche und der nachfolgenden Beschreibung.

Ist hiervon "einer" Elektrolysezelle, insbesondere mit "einer" Protonenaustauschmembran (jeweils im Singular) die Rede, versteht sich, dass Ausgestaltungen der Erfindung typischerweise mit mehreren solcher Zellen realisiert sind, wobei entsprechende Zellen insbesondere Teil eines Zellstapels (Stacks) bekannter Art sein können, in denen solche Zellen in Mehrzahl vorhanden sind. In einem derartigen Stack ist im Fall einer Elektrolyse unter Verwendung einer Protonenaustauschmembran eine Vielzahl von Anordnungen aus jeweils Anode, Protonenaustauschmembran und Kathode bereitgestellt, die jeweils durch Trenneinrichtungen und Mittel zur Wassereinspeisung bzw. Gasentnahme voneinander getrennt sind. In anderen Elektrolyseverfahren sind die dort entsprechend vorhandenen Elemente ebenfalls in Mehrzahl vorhanden. Es können Einspeise- bzw. Sammelleitungen bereitgestellt sein, die den gesamten Stapel versorgen. Es können selbstverständlich auch mehrere Zellstapel verwendet werden.

Wenngleich die vorliegende Erfindung nachfolgend (überwiegend) unter Bezugnahme auf eine Elektrolyse unter Verwendung einer Protonenaustauschmembran beschrieben wird, eignen sich Ausgestaltungen der vorliegenden Erfindung grundsätzlich auch für andere Elektrolyseverfahren, bei denen die hier beschriebenen Probleme in gleicher Weise auftreten können. Bei der Wasserelektrolyse wird herkömmlicherweise eine wässrige alkalische Lösung, typischerweise von Kaliumhydroxid, als Elektrolyt verwendet (AEL, Alkalische Elektrolyse). Die Elektrolyse erfolgt dabei mit einer uni- oder bipolaren Elektrodenanordnung und bei Atmosphärendruck oder im industriellen Maßstab auch deutlich darüber. Neuere Entwicklungen bei der Wasserelektrolyse umfassen die Verwendung der zuvor bereits erwähnten protonenleitenden lonenaustauschmembranen. Aber auch Elektrolysetechnologien unter Verwendung eines Anionenaustauschermembran (AEM, Anion Exchange Membrane) werden eingesetzt. Diese und sämtliche weiteren Elektrolyseverfahren können in Ausgestaltungen der Erfindung verwendet werden.

Ist vorliegend von einer "Anodenseite" bzw. "Kathodenseite" einer Elektrolysezelle, insbesondere mit Protonenaustauschmembran, die Rede, können diese Begriffe auch die Kathodenseiten bzw. Anodenseiten der Zellen entsprechender Zellstapel in Summe bezeichnen. Ein dieser/diesen Kathodenseite(n) (insgesamt) entnommenes Gas wird nachfolgend auch als "Kathodenentnahmegas" bezeichnet. Entsprechendes gilt an der Anodenseite, d.h. ein "Anodenentnahmegas".

Das Kathodenentnahmegas ist wasserstoffreich, das Anodenentnahmegas sauerstoffreich, wobei das Anodenentnahmegas jedoch typischerweise mehr Wasserstoff aufweist als das Kathodenentnahmegas Sauerstoff. Insbesondere durch den Einsatz von Protonenaustauschmembranen können, wie erwähnt, hohe Produktreinheiten erzielt werden, so dass das Kathodenentnahmegas sehr wenig Sauerstoff enthält.

Das Anodenentnahmegas wird zusammen mit Wasser an der Kathodenseite entnommen, d.h. von der Anodenseite wird zunächst ein Zweiphasenstrom ausgeführt. Nach einer Trennung in Gas- und Flüssigphase in einem Separator kann erstere beispielsweise einer Sauerstoffgewinnung zugeführt oder an die Atmosphäre abgegeben werden.

Ein Hauptproblem hinsichtlich des Zweiphasenstroms, der Sauerstoff und Wasser aufweist, und damit auch hinsichtlich der Gasphase ergibt sich aus dessen bzw. deren möglichem Wasserstoffgehalt. Angetrieben beispielsweise durch das Druckgefälle über eine Protonenaustauschmembran kann Wasserstoff durch diese passieren, und zwar durch Permeation, verstärkt aber beim Auftreten von Defekten bzw. Rissen. Beispielsweise in Szenarien von Niedriglast, im Standby, bzw. bei Defekten kann dieser Wasserstoffgehalt ggf. die untere Explosionsgrenze (UEG) von ca. 4 Volumenprozent Wasserstoff in Sauerstoff erreichen.

Nachfolgend werden zwei Szenarien erläutert, in denen entsprechend hohe Wasserstoffgehalte erreicht werden können. Die vorliegende Erfindung ist jedoch nicht hierauf beschränkt.

Beispielsweise kann eine entsprechende Anlage bei 0% Last im Standby betrieben werden. Die vorhandenen Pumpen laufen bei minimaler Last, es wird kein Wasserstoff und Sauerstoff mehr produziert. Allerdings ist die Kathodenseite noch voll mit Wasserstoff bei etwa 30 bar Überdruck beaufschlagt, der durch den Druckunterschied durch die Membran zur Anode diffundiert. Durch den Wasserstrom an der Anode wird der diffundierte Wasserstoff in den Separator transportiert. Es kommt zur Wasserstoffansammlung im Separator.

Bei beispielsweise 20% Last kann eine entsprechende Anlage dagegen im Minimallastbetrieb arbeiten. Es werden Wasserstoff und Sauerstoff produziert. Wasserstoff diffundiert durch die Membran zur Anode, strömt mit dem Sauerstoff zusammen in den Separator, und kann sich ebenfalls dort ansammeln.

Die (untere) Explosionsgrenze eines Gases gibt den Gehalt in einem Gasgemisch an, ab dem eine Entzündung bzw. Explosion bei zugleich ausreichendem Sauerstoffgehalt möglich ist. Letzteres ist im Falle des sauerstoffreichen Anodenentnahmegases bzw. des genannten Zweiphasenstroms immer der Fall.

Bei einer Explosion handelt es sich um einen unkontrollierten Abbrand eines zündfähigen Gasgemischs mit laminarer Flammenfront. Eine Explosion unterscheidet sich von einer Detonation im Wesentlichen durch die Geschwindigkeit der Ausbreitung.

Bei einer Explosion liegt diese unterhalb, bei einer Detonation typischerweise deutlich oberhalb der Schallgeschwindigkeit. Durch Explosionen und Detonationen von Gasgemischen in Behältern und Rohrleitungen kommt es zu einem massiven Druckanstieg, der zum Bersten der Behälter und entsprechenden Folgeschäden führen kann. Typischerweise kann bei einer Explosion mit einer Druckerhöhung um den Faktor Zehn gerechnet werden. Die Auswirkungen einer Detonation sind deutlich schwerwiegender. Hier kann der Druckanstiegsfaktor 50 und mehr betragen. Eine Explosion kann nach einer bestimmten Anlauflänge und einer Mindestkonzentration an Brennstoff und Sauerstoff in eine Detonation umschlagen.

Eine Zündquelle im Bereich innerhalb und stromab einer Elektrolysezelle, beispielsweise mit Protonenaustauschmembran, bzw. eines entsprechenden Stacks, kann nicht vollständig ausgeschlossen werden. Damit muss eine mögliche Zündung des explosionsgefährdeten Gasgemisches bei der Auslegung einer entsprechenden Anlage in Kauf genommen oder sicher verhindert werden.

Die Knallgasreaktion verläuft sehr schnell, so dass sich sehr rasch ausbreitende Flammengeschwindigkeiten ergeben, die oberhalb der Schallgeschwindigkeit liegen. Daher kann eine Explosion selbst in kleinen Räumen und Rohrleitungen in eine Detonation übergehen. Für ein Detonationsszenario müssen sehr hohe Explosionsdruckverhältnisse bei der Auslegung berücksichtigt werden.

Hierbei können sich auch dann, wenn eine Explosion bzw. Detonation "nur" in einem Separator zur Trennung des Zweiphasenstroms auftritt, Schäden in anderen Bereichen, insbesondere nachgeschalteten Apparaten wie Pumpen oder Wärmetauschern bzw. einer Elektrolysezelle bzw. einem Stack selbst ergeben, da der Explosionsdruck über das inkompressible Fluid (Wasser) auf diese übertragen wird.

Die vorliegende Erfindung ermöglicht sichere Lösungen für derartige Fälle und überwindet dabei die Nachteile des Standes der Technik. Herkömmlicherweise ist eine entsprechende explosions- bzw. detonationsfeste Auslegung bestenfalls sehr teuer und schlechtestenfalls technisch nicht realisierbar. Auch ein Schutz nachgeschalteter Apparate durch Druckentlastungsventile bzw. Berstscheiben kann herkömmlicherweise problematisch sein, da sich die Druckwelle der Explosion bzw. Detonation sehr rasch, d.h. mit ca. 3.000 m/s ausbreitet.

Es ist bereits bekannt, entsprechende Anlagen bereits ab einem Wert von 50% der unteren Explosionsgrenze von Wasserstoff im Separator, d.h. bei 2 Volumenprozent Wasserstoff, abzuschalten. In derartigen Betriebsszenarien kann dem Separator Stickstoff als Spülgas zugeführt werden, um den Wasserstoff zu verdünnen. Die Produktion der benötigten Mengen an Stickstoff (bis zu 3000 kg/h) ist indes ausgesprochen energieintensiv und teuer.

Aspekte der vorliegenden Erfindung umfassen nun, das Spülgas Stickstoff durch ein im Wesentlichen kohlendioxidfreies Gasgemisch, insbesondere durch kohlendioxidfreie Luft, zu ersetzen. Dies stellt eine technisch sehr viel einfacher zu realisierende und kostengünstigere Lösung zur Spülung eines Separators dar. Das kohlendioxidfreie Gasgemisch beeinflusst dabei nicht die Säureleitfähigkeit des Wassers. Beispielsweise hätte die Kohlendioxidkonzentration der Luft diesen Einfluss und würde damit die lonentauscher des Reinstwassersystems einer entsprechenden Anlage beladen und mithin die Lebensdauer der lonentauscher reduzieren. Durch den geringeren Energieaufwand in der Produktion entsprechender Gasgemische, insbesondere kohlendioxidfreier Spülluft, gegenüber der Produktion von Stickstoff, können die Betriebskosten der Spülung gesenkt werden. Investitionskosten können durch den einfacheren Aufbau eines Kohlendioxidabsorbers im Vergleich zu beispielsweise einer Luftzerlegungsanlage zur Gewinnung von Stickstoff ebenfalls eingespart werden.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Luft") ergebenden Bestandteilen weitere zugelassen sind, sofern sich die wesentlichen Merkmale der beanspruchten Zusammensetzung durch diese nicht signifikant ändern. Entsprechendes gilt auch Angaben wie "im Wesentlichen frei von" und dergleichen. Beispielsweise eignet sich ein "im Wesentlichen kohlendioxidfreies" Gasgemisch für die hier angesprochenen Zwecke, und dieses kann auch gewisse Restmengen an Kohlendioxid enthalten. Allerdings ist der Kohlendioxidgehalt so gering, dass dieser die Eigenschaften des Gasgemischs mengenmäßig oder reaktionstechnisch nicht nennenswert, nicht feststellbar, oder vernachlässigbar beeinflusst. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01% dieser Komponenten in Summe oder als Einzelwerte enthält. Die Prozentangaben können sich auf Mol-, Mengen- oder Volumenanteile beziehen.

Begriffe wie "reich" und "arm" bezeichnen insbesondere einen Gehalt einer oder mehrerer Komponenten, wobei "reich" insbesondere einen Gehalt von mehr als 75, 80, 85, 90, 95, 99, 99,9 oder 99,99% in Summe oder als Einzelwerte bezeichnet und "arm" insbesondere einen Gehalt von weniger als 25, 20, 15, 10, 5, 1, 0,1 oder 0,01% in Summe oder als Einzelwerte bezeichnet. Auch hier können sich die Prozentangaben auf Mol-, Mengen- oder Volumenanteile beziehen.

Vorliegend wird ein Verfahren zur Herstellung eines oder mehrerer Elektrolyseprodukte vorgeschlagen, wobei eine oder mehrere Elektrolysezellen verwendet werden. Wie erwähnt, kann bzw. können die eine oder die mehreren Elektrolysezellen Teil beliebiger Anordnungen sein, und es kann bzw. können ein oder mehrere Elektrolysestapel verwendet werden.

Der einen oder den mehreren Elektrolysezellen wird kathodenseitig ein wasserstoffreiches Kathodenentnahmegas entnommen, und der einen oder den mehreren Elektrolysezellen wird anodenseitig ein Anodenentnahmegas entnommen. Das Anodenentnahmegas wird der einen oder den mehreren Elektrolysezellen wie beschrieben als Teil eines Zweiphasenstroms entnommen, wobei der Zweiphasenstrom das Anodenentnahmegas und eine Wasserphase aufweist, wobei der Zweiphasenstrom oder ein Teil hiervon in einer Separatoranordnung unter Erhalt des Anodenentnahmegases und der Wasserphase getrennt wird.

Das Verfahren weist den bereits beschriebenen Verfahrensmodus auf, während welchem ein Gasraum der Separatoranordung unter Verwendung eines Spülgases gespült wird. Erfindungsgemäß wird, unter Erzielung der bereits erwähnten Vorteile, als das Spülgas ein im Wesentlichen kohlendioxidfreies Gasgemisch verwendet.

Gemäß einer Ausgestaltung der vorliegenden Erfindung kann im Wesentlichen kohlendioxidfreie Luft, nachfolgend auch als "Spülluft" bezeichnet, als das Spülgas verwendet werden. Dies erlaubt eine besonders wirtschaftliche Bereitstellung des Spülgases durch die Verwendung der in unbegrenzter Menge verfügbaren Umgebungsluft.

Die Bedeutung des Begriffs "im Wesentlichen frei" wurde bereits erläutert. Gemäß einer Ausgestaltung der vorliegenden Erfindung kann dabei ein Kohlendioxidgehalt der im Wesentlichen kohlendioxidfreien Luft weniger als 100 ppm, 10 ppm, 5 ppm oder 1 ppm (Millionstel Teile, insbesondere auf Mengen- oder Volumenbasis) betragen. Durch gewisse Restgehalte vereinfacht sich die Aufbereitung und die Säureleitfähigkeit kann dennoch sehr stark herabgesetzt werden.

Gemäß einer Ausgestaltung der vorliegenden Erfindung kann die kohlendioxidfreie Luft mittels einer Absorptionseinrichtung aus Umgebungsluft gebildet werden. Dies erlaubt den Einsatz bewährter und umfänglich erprobter Reinigungsverfahren. Beispielsweise kann die Absorptionseinrichtung für eine Amin- und/oder Laugewäsche eingerichtet sein, wobei eine Aminwäsche insbesondere für eine Vor- und die Laugewäsche für eine Feinreinigung eingesetzt werden kann. Alternativ oder zusätzlich ist die Verwendung weiterer, kryogener oder nichtkroygener Reinigungsverfahren, beispielsweise Membrantrennverfahren oder adsorptiver Trennverfahren, möglich. Der Fachmann wählt dabei gemäß seiner Fachkenntnis aus.

Die Spülluft kann der Adsorberstation insbesondere mittels einer oder mehrerer, seriell oder parallel angeordneter, Gebläse zugeführt werden. Es kann vorgesehen sein, beispielsweise im Falle eines Stromausfalls, in bestimmten Betriebszeiträumen die notwendige Spülluft aus Druckluftflaschen in das Spülluftverteilungssystem einzuspeisen. Ein Druckabfall im Spülluftsystem kann für einen kurzen Zeitraum (der insbesondere der Anfahrzeit der Gebläse entspricht) mit Instrumentenluft, die nicht notwendigerweise im Wesentlichen kohlendioxidfrei sein muss, ausgeglichen werden. In Ausgestaltungen der Erfindung kann insbesondere eine Redundanz sichergestellt werden, indem beispielsweise parallele Verdichter bzw. Gebläse bereitgestellt werden, von denen jeder bzw. jedes die erforderliche Gesamtleistung erbringen kann. Insbesondere können in Ausgestaltungen der Erfindung ein oder mehrere Pufferspeicher für Spülluft oder ein entsprechendes Tank- oder Druckflaschenversorgungssystem bereitgestellt werden.

Die vorliegende Erfindung eignet sich, wie bereits einleitend erwähnt, insbesondere für den Einsatz bei einer Elektrolyse unter Verwendung einer Protonenaustauschmembran, so dass gemäß einer Ausgestaltung der vorliegenden Erfindung die eine oder die mehreren Elektrolysezellen unter Verwendung einer Protonenaustauschmembran betrieben werden kann bzw. können. In entsprechenden Verfahren treten die eingangs erwähnten Probleme, die sich durch den Einsatz der vorliegenden Erfindung besonders vorteilhaft lösen lassen, aufgrund der relativen Dünnheit und Permeabilität der Membranen für Wasserstoff in besonderer Weise auf.

Gemäß einer Ausgestaltung der vorliegenden Erfindung kann ein Wasserstoffgehalt in dem Gasraum oder einem damit fluidisch verbundenen Bereich, d.h. in einer oder mehreren Gasleitungen oder Behältern, ggf. auch an unterschiedlichen Stellen, unter Verwendung einer Mess- und Steuereinrichtung ermittelt wird, wobei der Verfahrensmodus, in dem der Gasraum unter Verwendung des Spülgases gespült wird, dann eingeleitet wird, wenn der Wasserstoffgehalt einen vorgegebenen Schwellwert überschreitet. Auf diese Weise kann eine Bildung explosiver bzw. detonationsfähiger Atmosphären immer sicher vermieden werden. Insbesondere kann dabei der vorgegebene Schwellwert des Wasserstoffgehalts bei 1 bis 3 Volumenprozent, beispielsweise ca. 2 Volumenprozent, liegen, um einen entsprechenden Sicherheitspuffer zur unteren Explosionsgrenze zu schaffen.

Gemäß einer Ausgestaltung der vorliegenden Erfindung kann der Verfahrensmodus, während welchem dem Gasraum unter Verwendung des Spülgases gespült wird, ein Sonderbetriebsmodus sein, wobei das Verfahren ferner (zumindest) einen Normalbetriebsmodus umfasst, in dem der Gasraum nicht unter Verwendung des Spülgases gespült wird, und wobei der Sonderbetriebsmodus und der Normalbetriebsmodus nicht gleichzeitig, d.h. in nicht überlappenden Zeiträumen, durchgeführt werden. Zur Umschaltung zwischen den Verfahrensmodi und den dabei verwendeten Kriterien sei auf die obigen Ausführungen ausdrücklich verwiesen.

Eine Anlage zur Herstellung eines oder mehrerer Elektrolyseprodukte, die eine oder mehrere Elektrolysezellen aufweist, ist ebenfalls Gegenstand der Erfindung, wobei die Anlage dafür eingerichtet ist, der einen oder den mehreren Elektrolysezellen kathodenseitig ein wasserstoffreiches Kathodenentnahmegas zu entnehmen, der einen oder den mehreren Elektrolysezellen anodenseitig ein Anodenentnahmegas zu entnehmen, und das Anodenentnahmegas der einen oder den mehreren Elektrolysezellen als Teil eines Zweiphasenstroms, der das Anodenentnahmegas und eine Wasserphase aufweist, zu entnehmen, wobei die Anlage eine Separatoranordnung aufweist und dafür eingerichtet ist, den Zweiphasenstrom oder einen Teil hiervon mittels der Separatoranordnung unter Erhalt des Anodenentnahmegases und der Wasserphase zu trennen, und wobei die Anlage zum Betrieb in einem Betriebsmodus eingerichtet ist, während welchem ein Gasraum der Separatoranordnung unter Verwendung eines Spülgases gespült wird. Dabei ist vorgesehen, dass die Anlage dafür eingerichtet ist, als das Spülgas ein im Wesentlichen kohlendioxidfreies Gasgemisch zu verwenden.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 eine Anlage gemäß einer Ausgestaltung der Erfindung veranschaulicht, und
Figur 2 ein Luftsystem gemäß einer Ausgestaltung der Erfindung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

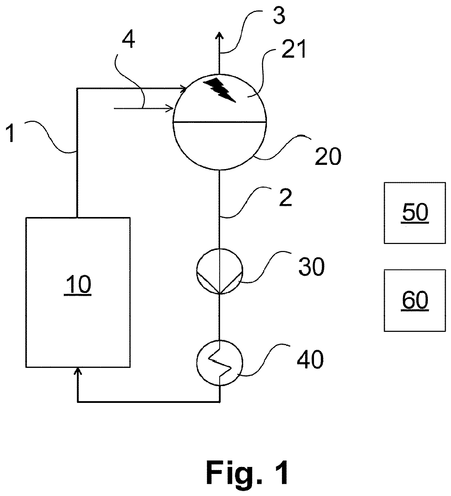

In Figur 1 ist ein anhand eines stark vereinfachten Flussdiagramms eine Anlage gemäß einer Ausgestaltung der vorliegenden Erfindung veranschaulicht Es ist dabei lediglich der Wasser- bzw. Sauerstoffkreislauf an der Anodenseite einer Elektrolysezelle mit Protonenaustauschmembran dargestellt. Details und kathodenseitig entnommenes Kathodenentnahmegas, das im Wesentlichen reiner Wasserstoff ist, sind aus Gründen der Übersichtlichkeit nicht veranschaulicht.

Wie erwähnt, eignen sich Ausgestaltungen der vorliegenden Erfindung aber auch für andere Elektrolyseverfahren. Die Elektrolysezelle bzw. ein entsprechender Stack aus einer Vielzahl von Elektrolysezellen ist dabei mit 10 angegeben.

Wie bereits zuvor erläutert, wird anodenseitig zunächst ein Zweiphasenstrom 1 mit einem Wasser- und einem Gasanteil aus der Elektrolysezelle bzw. dem Stack 10 ausgeführt. Neben Sauerstoff findet sich in dem Gasanteil aufgrund Permeation durch die Protonenaustauschmembran, und verstärkt im Fall von Defekten der Protonenaustauschmembran oder während oben der erläuterten Standby- oder Teillastphasen, auch Wasserstoff.

Der Zweiphasenstrom wird in eine Separatoranordnung 20 eingespeist, in dessen unterem Bereich der Wasseranteil des Zweiphasenstroms 1 abscheidet, so dass dieser als Wasserstrom 2 (mit gewissen Restanteilen von gelösten Gasen) abgezogen werden kann. Der Wasserstrom 2 kann mittels einer Pumpe 30 im Kreislauf geführt und mittels eines Wärmetauschers 40 temperiert werden.

Der Gasanteil steht in einem Gasraum 21 an und kann in Form eines Gasstroms 3 ausgeführt und je nach Ausgestaltung des Verfahrens zur Bildung eines Sauerstoffprodukts genutzt oder durch Abblasen an die Atmosphäre verworfen werden.

Wie durch einen gezackten Pfeil veranschaulicht, kann in einem Gasraum in der Separatoranordnung 200, aber auch in den entsprechenden Leitungen, bei entsprechendem Wasserstoffgehalt eine Explosion bzw. Detonation entstehen. Wie erwähnt, können sich dabei auch dann, wenn eine Explosion bzw. Detonation "nur" in der Separatoranordnung 20 auftritt, Schäden in anderen Bereichen, insbesondere nachgeschalteten Apparaten wie der Pumpe 30, dem Wärmetauscher 40 oder der Elektrolysezelle bzw. dem Stack 10 ergeben, da der Explosionsdruck über das inkompressible Fluid (Wasser) auf diese übertragen wird.

Daher ist die hier dargestellte Anlage dafür eingerichtet, in einem Betriebs- bzw. Verfahrensmodus betrieben zu werden, während welchem ein Gasraum 21 der Separatoranordnung 20 unter Verwendung eines Spülgases 4 gespült wird. In Ausgestaltungen der Erfindung wird dabei als das Spülgas 4 ein im Wesentlichen kohlendioxidfreies Gasgemisch, insbesondere kohlendioxidfreie Luft, verwendet.

Insbesondere kohlendioxidfreie Luft kann dabei mittels einer Adsorberstation oder einer Absorptionseinrichtung 60 aus Umgebungsluft gebildet werden, die für eine Amin- und/oder Laugewäsche eingerichtet ist. Auch andere Reinigungsverfahren können, alternativ oder in beliebiger Kombination, eingesetzt werden.

Ein Wasserstoffgehalt in dem Gasraum 21 oder einem damit fluidisch verbundenen Bereich kann in Ausgestaltungen der vorliegenden Erfindung unter Verwendung einer Mess- und Steuereinrichtung 50 ermittelt werden, wobei der Verfahrensmodus, in dem der Gasraum 21 unter Verwendung des Spülgases 4 gespült wird, mittels dieser Einrichtung insbesondere dann eingeleitet werden kann, wenn der Wasserstoffgehalt einen vorgegebenen Schwellwert überschreitet.

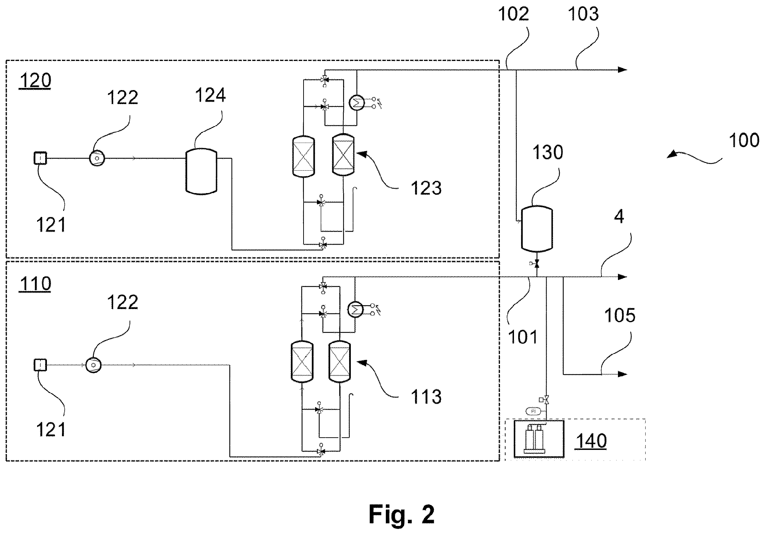

In Figur 2 ist ein Luftsystem 100 gemäß einer Ausgestaltung der Erfindung veranschaulicht. Das Luftsystem 100 umfasst im dargestellten Beispiel neben einer gestrichelt umfasst dargestellten Spüllufteinheit 110 zur Bereitstellung von Spülluft 101 eine gestrichelt umfasst dargestellte Steuerlufteinheit 120, die im Regelbetrieb zur Bereitstellung von Steuerluft 102 dient. Diese kann als Instrumentenluft 103 entsprechenden Verbrauchern zugeführt werden. Zum Ausgleich von Druckschwankungen, zur Überbrückung von kurzzeitigen Unterbrechungen der Stromversorgung usw., kann ein Pufferspeicher 130 vorhanden sein, der mit einem Teil der Steuerluft 102 gefüllt werden kann.

Die Spüllufteinheit 110 und die Steuerlufteinheit 120 können gleich oder zumindest in Teilen vergleichbar aufgebaut sein und jeweils einen Ansaugfilter 111 bzw. 121, einen Verdichter bzw. ein Gebläse 112 bzw. 122, und eine Adsorberstation 113 bzw. 123, die in grundsätzlich bekannter Art aufgebaut sein kann, aufweisen. In der Steuerlufteinheit 120 ist ein weiterer Pufferspeicher 124 veranschaulicht.

Bei Ausfall der Spüllufteinheit kann mittels eines Tank- bzw. Druckflaschensystems 140 kohlendioxidfreie oder -haltige Druckluft eingespeist werden. Ebenso kann in solchen Fällen dem Pufferspeicher 130 Druckluft entnommen werden. Die Spülluft kann dann in Form des Spülgasstroms 4 wie zuvor erläutert verwendet werden. Sie kann dazu bspw. einer Sammel- bzw. Verteilerleitung zugeführt und von dieser auf mehrere Elektrolysezellen bzw. Stacks 10 verteilt werden. Weitere Spülluft 105 kann beispielsweise anderen Verbrauchern zugeführt werden.

## Patentansprüche

1. Verfahren zur Herstellung eines oder mehrerer Elektrolyseprodukte, wobei eine oder mehrere Elektrolysezellen (10) verwendet werden, wobei der einen oder den mehreren Elektrolysezellen (10) kathodenseitig ein wasserstoffreiches Kathodenentnahmegas entnommen wird, wobei der einen oder den mehreren Elektrolysezellen (10) anodenseitig ein Anodenentnahmegas (3) entnommen wird, wobei das Anodenentnahmegas (3) der einen oder den mehreren Elektrolysezellen (10) als Teil eines Zweiphasenstroms (1) entnommen wird, wobei der Zweiphasenstrom (1) das Anodenentnahmegas (3) und eine Wasserphase (2) aufweist, wobei der Zweiphasenstrom (1) oder ein Teil hiervon in einer Separatoranordnung (20) unter Erhalt des Anodenentnahmegases (3) und der Wasserphase (2) getrennt wird, und wobei das Verfahren einen Verfahrensmodus aufweist, während welchem ein Gasraum (21) der Separatoranordnung (20) unter Verwendung eines Spülgases (4) gespült wird, **dadurch gekennzeichnet, dass** als das Spülgas (4) ein im Wesentlichen kohlendioxidfreies Gasgemisch verwendet wird.

2. Verfahren nach Anspruch 1, bei dem im Wesentlichen kohlendioxidfreie Luft als das Spülgas verwendet wird.

3. Verfahren nach Anspruch 2, bei dem ein Kohlendioxidgehalt der im Wesentlichen kohlendioxidfreien Luft weniger als 100 ppm, 10 ppm, 5 ppm oder 1 ppm beträgt.

4. Verfahren nach einem der Ansprüche 2 oder 3, bei dem die kohlendioxidfreie Luft mittels einer Absorptionseinrichtung (60) aus Umgebungsluft gebildet wird.

5. Verfahren nach Anspruch 4, bei dem die Absorptionseinrichtung (60) für eine Amin- und/oder Laugewäsche eingerichtet ist.

6. Verfahren nach einem der vorstehenden Ansprüche, bei der die eine oder die mehreren Elektrolysezellen (10) unter Verwendung einer Protonenaustauschmembran betrieben werden.

7. Verfahren nach einem der vorstehenden Ansprüche, bei dem ein Wasserstoffgehalt in dem Gasraum (21) oder einem damit fluidisch verbundenen Bereich unter Verwendung einer Mess- und Steuereinrichtung (50) ermittelt wird, wobei der Verfahrensmodus, in dem der Gasraum (21) unter Verwendung des Spülgases (4) gespült wird, dann eingeleitet wird, wenn der Wasserstoffgehalt einen vorgegebenen Schwellwert überschreitet.

8. Verfahren nach Anspruch 7, bei dem der vorgegebene Schwellwert des Wasserstoffgehalts bei 1 bis 3 Volumenprozent liegt.

9. Verfahren nach einem der vorstehenden Ansprüche, bei dem der der Verfahrensmodus, in dem Gasraum (21) unter Verwendung des Spülgases (4) gespült wird, ein Sonderbetriebsmodus ist, wobei das Verfahren einen Normalbetriebsmodus umfasst, in dem der Gasraum (21) nicht unter Verwendung des Spülgases (4) gespült wird, und wobei der Sonderbetriebsmodus und der Normalbetriebsmodus nichtgleichzeitig durchgeführt werden.

10. Anlage zur Herstellung eines oder mehrerer Elektrolyseprodukte, die eine oder mehrere Elektrolysezellen (10) aufweist, wobei die Anlage und dafür eingerichtet ist, der einen oder den mehreren Elektrolysezellen (10) kathodenseitig ein wasserstoffreiches Kathodenentnahmegas zu entnehmen, der einen oder den mehreren Elektrolysezellen (10) anodenseitig ein Anodenentnahmegas (3) zu entnehmen, und das Anodenentnahmegas (3) der einen oder den mehreren Elektrolysezellen (10) als Teil eines Zweiphasenstroms (1), der das Anodenentnahmegas (3) und eine Wasserphase (2) aufweist, zu entnehmen, wobei die Anlage eine Separatoranordnung (20) aufweist und dafür eingerichtet ist, den Zweiphasenstrom (1) oder einen Teil hiervon mittels der Separatoranordnung (20) unter Erhalt des Anodenentnahmegases (3) und der Wasserphase (2) zu trennen, und wobei die Anlage zum Betrieb in einem Betriebsmodus eingerichtet ist, während welchem ein Gasraum (21) der Separatoranordnung (20) unter Verwendung eines Spülgases (4) gespült wird, **dadurch gekennzeichnet, dass** die Anlage dafür eingerichtet ist, als das Spülgas (4) ein im Wesentlichen kohlendioxidfreies Gasgemisch zu verwenden.

11. Anlage nach Anspruch 10, die zur Durchführung eines Verfahrens nach einem der Ansprüche 1 bis 9 eingerichtet ist.
